# EUROPEAN PATENT APPLICATION

(11) **EP 1 331 599 A2**
(43) Date of publication of application: **30.07.2003**
(21) Application number: 03001261.1
(22) Date of filing: 21.01.2003
(51) Int. Cl.: G06K 19/07

(54) **Semiconductor integrated circuit and data carrier with sand integrated circuit**

(30) Priority: 25.01.2002 JP 2002016263
(71) Applicant: MATSUSHITA ELECTRIC INDUSTRIAL CO., LTD., Kadoma-shi, Osaka 571-8501 (JP)
(72) Inventor: Nakane, George, Nara-shi, Nara 631-0804 (JP); Ohya, Mitsuyoshi, Takatsuki-shi, Osaka 569-1144 (JP)
(74) Representative: Grünecker, Kinkeldey, Stockmair & Schwanhäusser Anwaltssozietät

(57) **Abstract**

The present invention provides a smaller non-contact IC card that includes a counter for measuring time from when the non-contact IC card enters communication coverage of a reader/writer until it actually receives a command from the reader/writer. By using the time measured by the counter as a random-number value, a high-speed, aperiodic, equally random and hard-to-predict random-number data can be generated, thus achieving minimization of non-contact IC cards.

## Description

### Field of the Invention

The present invention relates to a semiconductor integrated circuit, a non-contact information medium with the semiconductor integrated circuit, and a non-contact information system including the non-contact information medium.

### Background of the Invention

Data carriers such as non-contact IC cards have become commercially practical in recent years that are powered and send and receive data by using mutual induction of coils and radio waves having a certain wavelength. These non-contact IC cards may be broadly classified as close coupling, proximity, or vicinity cards according to distance from a reader/writer that sends and receives radio waves to and from the non-contact IC cards. Standards for these cards are being established.

Vicinity non-contact IC cards, which can be used at a distance of approximately 10 cm at maximum from a reader/writer, have the potential for finding considerably wide application; if it is used for a season ticket, for example, it enables to open/close a gate based on a non-contact interaction with the reader/writer for information without requiring to take out a non-contact IC card from a pass case at the gate.

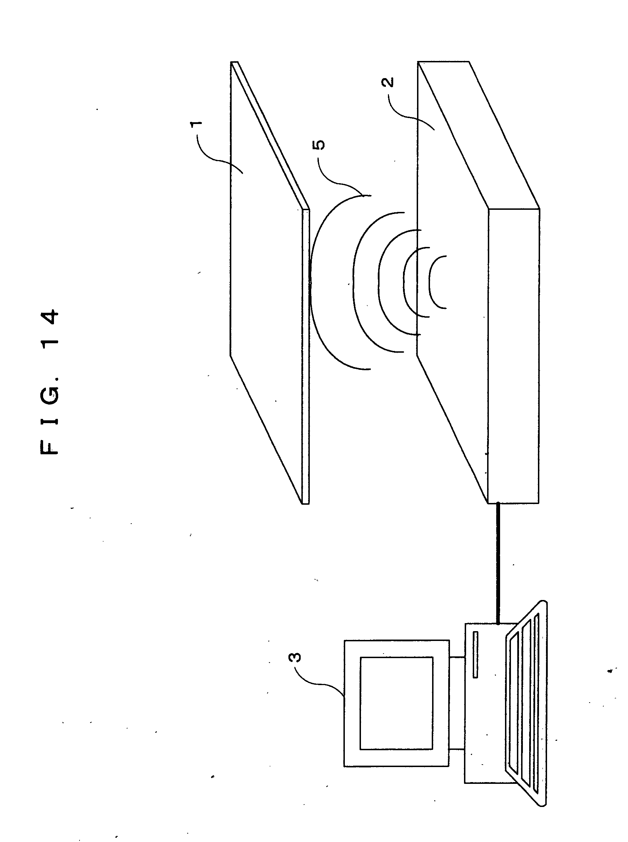

Prior-art technologies for non-contact IC cards containing a semiconductor integrated circuit will be described below with respect to FIGS. 14 through 16.

FIG. 14 shows a general view of a non-contact IC card system.

When a non-contact IC card 1 approaches a reader/writer 2, they exchange signals with each other by using an electromagnetic wave without contacting each other and the reader/writer sends and receives information on the non-contact IC card 1 to and from a host 3.

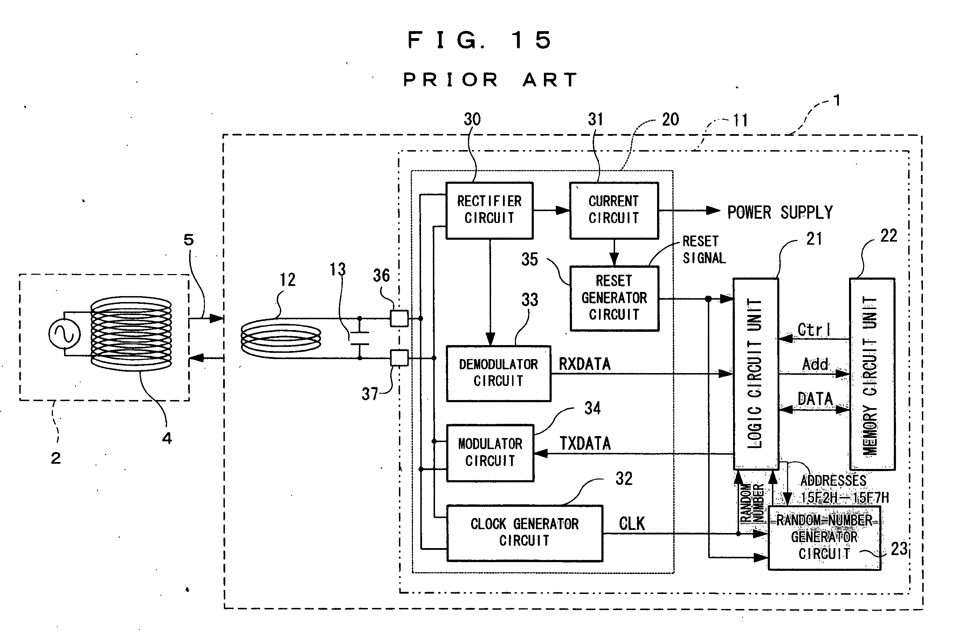

The non-contact IC card 1 is configured as shown in FIG. 15.

The non-contact IC card 1 comprises a non-contact IC card LSI 11, an antenna coil 12, and a tuning capacitance 13. The non-contact IC card LSI 11 includes an analog circuit unit 20, a logic circuit unit 21, a memory circuit unit 22, and a random-number generator circuit 23.

The antenna coil 12 is connected to pads 36 and 37 of the non-contact IC card LSI 11 for sending and receiving an electromagnetic wave 5 outputted from the antenna coil 4 of the reader/writer 2. The tuning capacitance 13 is connected to the antenna coil 12. When the antenna coil 12 receives the electromagnetic wave 5 from the reader/writer 2, an alternating voltage is generated across the antenna coil 12 (between the pad 36 and pad 37).

The alternating voltage generated across the antenna coil 12 is provided to the analog circuit unit 20. The analog circuit unit 20 includes a rectifier circuit 30, a power supply circuit 31, a clock generator circuit 32, a demodulator circuit 33, a modulator circuit 34, and a reset generator circuit 35. The rectifier circuit 30 and power supply circuit 31 generate a power supply voltage for operating the logic circuit unit 21, memory circuit unit 22, and random-number generator circuit 23.

The reset generator circuit 35 monitors the voltage generated by the power supply circuit 31 and, when a power-supply-voltage level that does not cause malfunction of the non-contact IC card LSI 11 is reached, releases a reset signal to operate the non-contact IC card LSI 11.

The clock generator circuit 32 generates from an alternating voltage signal generated across the antenna coil 12 a clock for operating the logic circuit unit 21 and memory circuit unit 22.

Data communicated between the non-contact IC card 1 and the reader/writer 2 is superimposed on the electromagnetic wave 5 and demodulated by the demodulator circuit 33 (when the non-contact IC card 1 receives data from the reader/writer 2) or modulated by the modulator circuit 34 (when the non-contact IC card 1 sends data to the reader/writer 2). The data communicated between the non-contact IC card 1 and the reader/writer 2 is processed in the logic circuit unit 21, stored in the memory circuit unit 22 by specifying an address and the data, and read and written by specifying the address.

In order to prevent leakage or tampering of data written in the non-contact IC card 1, the IC card 1 and reader/writer 2 perform a process for authenticating each other in exchanging data. That is, the reader/writer 2 performs two-way authentication together with the non-contact IC card 1 that returns a predetermined response signal to a polling signal issued by the reader/writer 2. Known two-way authentication methods include those using encryption keys.

A two-way authentication between a non-contact IC card 1 and a reader/write 2 using encryption keys will be briefly described below.

The reader/writer 2 sends a random number a, which it internally generates, to the non-contact IC card 1. The non-contact IC card 1 uses its own encryption key to converts the received random number a into a random number A and sends it back to the reader/writer 2. The reader/writer 2 uses a common encryption key shared with that particular non-contact IC card 1 to process the random number a that it generated to obtain a random number A' and compares the random number A' with the random number A sent from the non-contact IC card 1. If the random number A matches the random number A', the reader/writer 2 authenticates the non-contact IC card 1 as a valid one.

Then, the non-contact IC card 1 sends a random number b, which it internally generates, to the reader/writer 2. The reader/writer 2 receives and converts the random number b into a random number B by using its own encryption key and sends the random number B back to the non-contact IC card 1. The non-contact IC card uses a common encryption key shared with the particular reader/writer 2 to process the generated random number b to obtain a random number B' and compares the random number B' with the random number B sent from the reader/writer 2. If the random number B matches the random number B', the non-contact IC card 1 authenticates the reader/writer 2 as a valid one.

A random-number generator circuit 23 is contained in the non-contact IC card 1 and the reader/writer 2 for generating a random number that is used in two-way authentication.

Thermal noise signal sources using thermal agitation of resistors are used in most fields in order to generate unpredictable random numbers. However, because voltage fluctuations generated by a thermal noise signal is very small (approximately 50µV), a highly sensitive amplifier is required. Furthermore, it is difficult to amplify a signal from the thermal noise signal sources that uses thermal agitation of a resistor because a power supply voltage in a non-contact IC card 1 is generated by rectifying an electromagnetic wave and carrier and transmission data signal components of the electromagnetic wave are superimposed on the power supply voltage as considerable noise. Therefore, in non-contact IC cards, logic circuits are typically used as random-number generators 23.

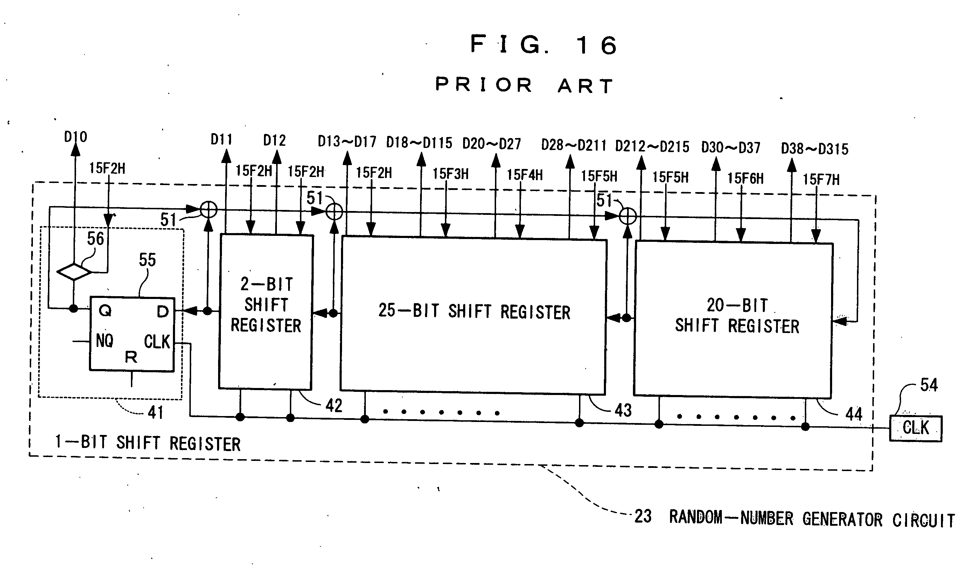

FIG. 16 shows an exemplary random-number generator 23 according to the prior art.

The random-.number generator circuit 23 is a so-called 48-bit M-sequence random-number generator circuit (hereinafter, M-sequence stands for Maximum-length linearly recurring sequence), which consists of a 1-bit shift register 41, a 2-bit shift register 42, a 25-bit shift register 43, and a 20-bit shift register 44 that are cascaded (connected in multistage series), and adders 51, 51, 51 making up an adder circuit which provides a total sum of outputs of these bit shift registers to an input terminal of the 20-bit shift register 44 in the first stage.

The 1-bit shift register 41 comprises a flip-flop 55, which operate in synchronization with a clock signal CLK outputted from a CLK circuit 32, and a transfer gate 56. When an address signal of which the-address 15F2H is selected by a CPU contained within the logic circuit 21 changes from L to H, the 1-bit shift register 41 provides random-number data D10 as an output from the flip-flop 55.

Each of the 2-bit shift register 42, 25-bit shift register 43, and 20-bit shift register 44 is composed of series-connected circuits as many as the number of bits shifted by it and each circuit is similar to the circuit of the 1-bit shift register 41. The 2-bit shift register 42 outputs random-number data D11 and D12 when address 15F2H is selected. The 25-bit register 43 outputs random-number data D13 to D17, D18 to D115, D20 to D27, and D28 to D211 when addresses 15F2H, 15F3H, 15F4H, and 15F5H are selected. The 20-bit shift register 44 outputs random-number data D212 to D215, D30 to D37, and D38 to D315 when addresses 15F5H, 15F6H, and 15F7H are selected.

### Disclosure of the Invention

Random numbers generated by the random-number generator circuit 23 configured as described above have a certain generation pattern that repeatedly appears at predetermined time intervals.

Therefore, data communicated between the reader/writer 2 and a non-contact IC card 1 could be tapped and thus the generation pattern of the random number could be identified. If one identifies the pattern of the random numbers, he can use a table that associates a random number a and a random number A to counterfeit the non-contact IC card 1 without having no idea of encryption keys or encryption used. Likewise, one can use a table associating a random number b and a random number B to counterfeit the reader/writer 2.

In order to effectively prevent forgery of the non-contact IC card 1 and reader/writer 2 due to tapping of communicated data described above, a random-number generator circuit is required that provide a generation pattern that cannot be cracked even if communicated data is tapped. Although illegal decipher of a random number generation pattern can be effectively prevented by increasing the. complexity of the random-number-generator circuit, the size of the circuit would also be increased. It is desirable that the size of a random-number generator circuit contained especially in a non-contact IC card 1 be small.

Before performing communication involving two-way authentication as described above, a non-contact IC card 1 must change response time of a response signal to polling from the reader/writer 2 at timing for example based on a random number internally generated or perform other processes in order to avoid a collision of the response signal with a response signal outputted from another non-contact IC card. A random-number-generation circuit operating at a high speed is desirable to improve the communication speed in the non-contact IC card 1 and the reader/writer 2.

An object of the present invention is to provide a semiconductor integrated circuit that has a simple configuration, enables downsizing of a non-contact IC card (non-contact information medium) containing that circuit, and can generate at high speed random number data that is equally random and unpredictable.

To solve the above-described problems, a semiconductor integrated circuit for data carriers according to the present inventions contains a counter composed of logic circuits for generating random numbers. Each time a non-contact IC card 1 containing the semiconductor integrated circuit enters the coverage of a reader/writer 2, the counter measures the amount of time from when the non-contact IC card enters the coverage of the reader/writer 2 until it actually receives a command from the reader/writer 2 and use the value (measure time) as a random number value, thereby generating an aperiodic, completely and equally random number. Thus, a counterfeit-resistant secure non-contact IC card can be implemented that can resist attack by a malicious third party.

The present invention provides a semiconductor integrated circuit to be used in a data carrier recognizing a signal sent from a reader/writer and responding by returning a signal to the reader/writer in a non-contact information system, characterized in that the semiconductor integrated circuit comprises: a rectifier circuit receiving and rectifying carrier transmitted from the reader/writer; a demodulator circuit demodulating inputted received signals to reproduce data; and a random-number generator circuit counting clock signals from a time when an output voltage from the rectifier circuit exceeds a predetermined value until the reader/writer is recognized to measure a time period and generate random numbers.

Further, the semiconductor integrated circuit is characterized in that a reset generator circuit is provided for detecting a time when an input voltage exceeds a predetermined value by using, as an input, the output voltage from the rectifier circuit receiving and rectifying carrier transmitted from the reader/writer, and the random-number generator circuit starts counting in response to an output signal from the reset generator circuit.

Further, the semiconductor integrated circuit is characterized in that the random-number generator circuit ends the counting when it recognizes a modulated signal from the modulator modulating an inputted received signal to restore data, or a synchronization signal contained in the received signal.

Further, the semiconductor integrated circuit is characterized in that the clock signal is a synchronous clock obtained by frequency-dividing the carrier sent from the reader/writer by means of a clock generator circuit.

Further, the semiconductor integrated circuit is characterized by comprising a logic circuit unit returning random numbers generated by the random-number generator circuit to the reader/writer.

The present invention provides a semiconductor integrated circuit to be used in a data carrier recognizing a signal sent from a reader/writer and responding by returning a signal to the reader/writer in a non-contact information system, characterized in that the semiconductor integrated circuit comprises: a rectifier circuit receiving and rectifying carrier transmitted from the reader/writer; a demodulator circuit demodulating inputted received signals to reproduce data; a first random-number generator circuit measuring a time period from a time when an output voltage from the rectifier circuit exceeds a first predetermined value until the reader/writer is recognized, and generating random numbers; and a second random-number generator circuit measuring a time period from a time when the output voltage from the rectifier circuit exceeds a second predetermined value until the reader/writer is recognized, and generating random numbers. Further, the semiconductor integrated circuit is characterized by further comprising a logic circuit unit returning random numbers generated by the first and second random-number generator circuits to the reader/writer.

The present invention provides a semiconductor integrated circuit to be used in a data carrier recognizing a signal sent from a reader/writer and responding by returning a signal to the reader/writer in a non-contact information system, characterized in that the semiconductor integrated circuit comprises: a rectifier circuit receiving and rectifying carrier transmitted from the reader/writer; a demodulator circuit demodulating inputted received signals to reproduce data; a first random-number generator circuit counting first clock signals from a time when an output voltage from the rectifier circuit exceeds a prescribed value until the reader/writer is recognized, measuring a time period, and generating random numbers; and a second random-number generator circuit counting second clock signals different from the first clock signals from a time when the output voltage from the rectifier circuit exceeds a predetermined value until the reader/writer is recognized, the output voltage having been obtained by receiving and rectifying carrier sent from the reader/writer, measuring a time period, and generating random numbers.

Further, the semiconductor integrated circuit is characterized in that the first clock signal is a synchronous clock obtained by frequency-dividing the carrier sent from the reader/writer by means of a clock generator circuit, and the second clock signal is an asynchronous clock generated by an asynchronous clock generator circuit.

Further, the semiconductor integrated circuit is characterized by further comprising a logic circuit unit returning random numbers generated by the first and second random-number generator circuits to the reader/writer.

The present invention provides a semiconductor integrated circuit that is any one of the foregoing semiconductor integrated circuits, characterized by further comprising a parallel-serial converter circuit converting a bit-parallel random number generated by the random-number generator into a bit-serial random number, and an M-sequence-random-number generator circuit generating an M-sequence random number by using a random number outputted from the parallel-serial converter circuit as an initial value.

The present invention provides a semiconductor integrated circuit that is any one of the foregoing semiconductor integrated circuits, characterized in that the random-number generator circuit comprises a binary counter, and the semiconductor integrated circuit further comprises a first selector circuit selecting clock signals to be counted by the binary counter and a second selector circuit (141b) selecting a reset signal for resetting the binary counter.

Further, the present invention provides a data carrier mounted with any one of the foregoing semiconductor integrated circuits.

### Brief description of the drawings

FIG. 1 shows a configuration of a random-number generator circuit which is a partial circuit of a semiconductor' integrated circuit according to a first embodiment of the present invention;
FIG. 2 is a timing diagram of communication between a non-contact IC card and a reader/writer according to the first embodiment;
FIG. 3 shows a diagram illustrating dependence of a power supply voltage and a reset signal on distance between the non-contact IC card and the reader/writer according to the first embodiment;
FIG. 4 shows waveforms of signals in a time range A shown in FIG. 2 according to the first embodiment;
FIG. 5 is a diagram illustrating a probability distribution of a received-signal waiting time according to the first embodiment;
FIG. 6 shows a configuration of an N-bit binary counter and a timing diagram;
FIG. 7 shows a configuration of a random-number generator circuit of a semiconductor integrated circuit according to a second embodiment of the present invention;
FIG. 8 is a diagram illustrating dependence of first and second reset signals on distance according to the second embodiment;
FIG. 9 shows a relationship between received-signal waiting times T₀₁ and T₀₂ according to the second embodiment;
FIG. 10 shows a configuration of a random-number generator of a semiconductor integrated circuit according to a third embodiment of the present invention;
FIG. 11 shows a configuration of a clock generator circuit of the third embodiment;
FIG. 12 shows a configuration of a random-number generator of a semiconductor integrated circuit according to a fourth embodiment of the present invention;
FIG. 13 shows a configuration of a random-number generator of a semiconductor integrated circuit according to a fifth embodiment of the present invention;
FIG. 14 shows a general view of a non-contact IC card system;
FIG. 15 shows a block diagram of a non-contact IC card according to prior art; and
FIG. 16 shows a configuration of a random-number generator circuit (M-sequence random-number generator circuit) according to the prior art.

### Description of the Embodiments

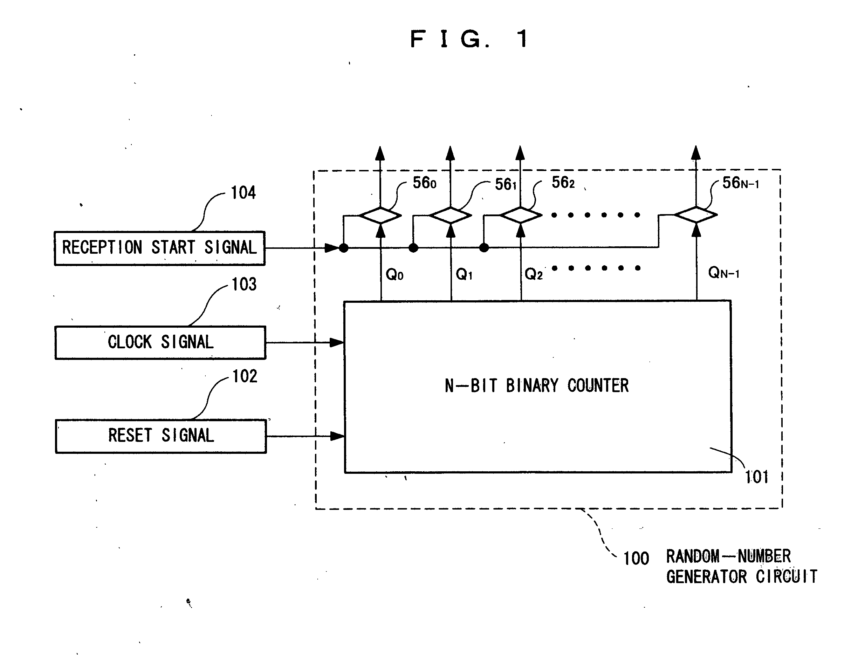

Embodiments of the present invention will be described below with respect to FIGS. 1 to 13.

In the following description, elements having effects similar to those of elements shown in FIG. 15, which shows an example of prior art, are labeled with the same reference number as those elements.

### First embodiment

FIGS. 1 to 6 show a first embodiment of the present invention.

FIG. 1 shows a random-number generator circuit, which can be included in a non-contact IC card 1 in place of a random-number generator circuit 23 shown in FIG. 15.

The random number generator circuit 100 comprises an N-bit binary counter 101 and N transfer gates 56₀ through 56_{N-1}. A reset signal 102 and a clock signal 103 are inputted into the N-bit binary counter 101, which has N outputs Q₀ through Q_{N-1} and outputs an N-bit random number through the N transfer gates 56₀ through 56_{N-1} in response to a reception start signal 104.

The clock signal 103 is a synchronous clock signal produced by a clock generator circuit 32 frequency-dividing a carrier sent from a reader/writer 2.

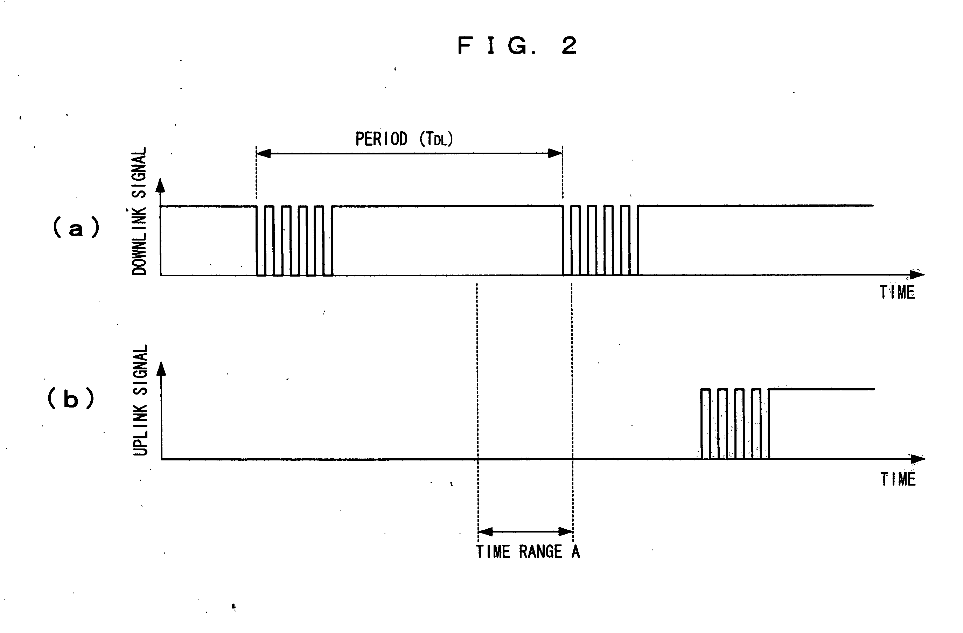

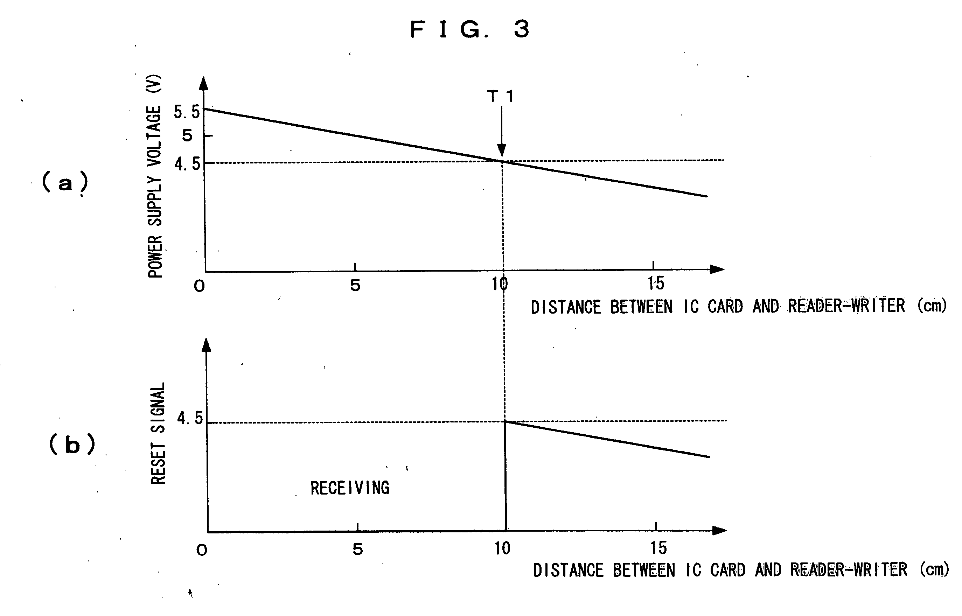

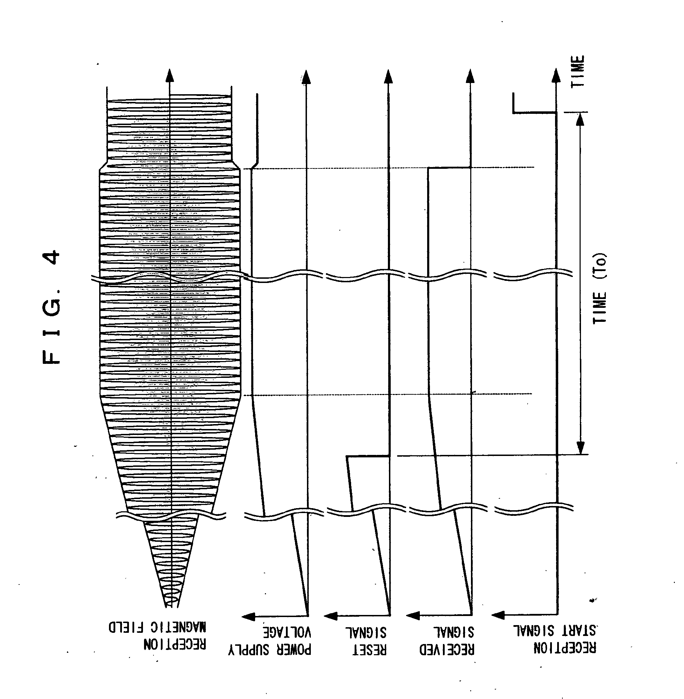

FIG. 2 shows a timing diagram of communication between a non-contact IC card and the reader/writer 2. FIG. 3 shows dependence of a power supply voltage and a reset signal that are generated in a non-contact IC card LSI 11 on distance between the non-contact IC card 1 and the reader/writer 2. FIG. 4 shows the waveforms of signals in a time range A zoomed in on the time range A shown in FIG. 2.

The reader/writer 2 sends out a carrier (of 13.56 MHz in an international standard, ISO/IEC 14443) and superimposes a downlink signal on it in a time period T_{DL} as shown in FIG. 2a to poll a non-contact IC card 1.

When the non-contact IC card 1 approaches the reader/writer 2, a power supply voltage generated within a rectifier circuit 30 rises as shown in FIG. 3a. At time T1 at which the power supply voltage increases to a predetermined voltage or higher (4.5V or higher in this example), the reset signal is released as shown in FIG. 3b and the non-contact IC card 1 starts to operate. The non-contact IC card 1 sends data (an uplink signal) to the reader/writer 2.

When the non-contact IC card 1 starts signal reception and detects a synchronization pattern formed by the downlink signal and received signal sent from the reader/writer 2, a reception start signal 104 is generated. If the non-contact IC card successfully receives the signal, it sends an uplink signal to the reader/writer 2. Thus, one transaction ends.

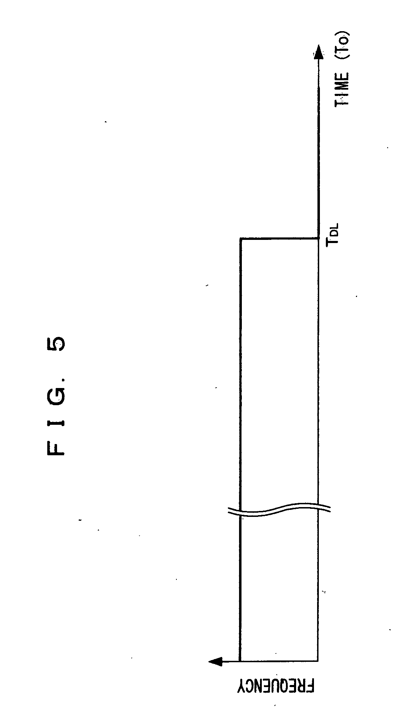

FIG. 5 shows a probability distribution of received-signal waiting time T₀ from the release of the reset signal 102 to the output of the reception start signal 104.

The reader/writer 2 sends the downlink signal in a predetermined time period T_{DL}, whereas a non-contact IC card 1 is manually brought close to the reader/writer 2. Therefore, a period in which the non-contact IC card 1 approaches the reader/writer 2 has no correlation to the period T_{DL}.

Accordingly, the reception waiting times T₀ are equally and completely random within period T_{DL} as shown in FIG. 5. The received-signal waiting times T₀ can be measured and used as equally aperiodic random numbers.

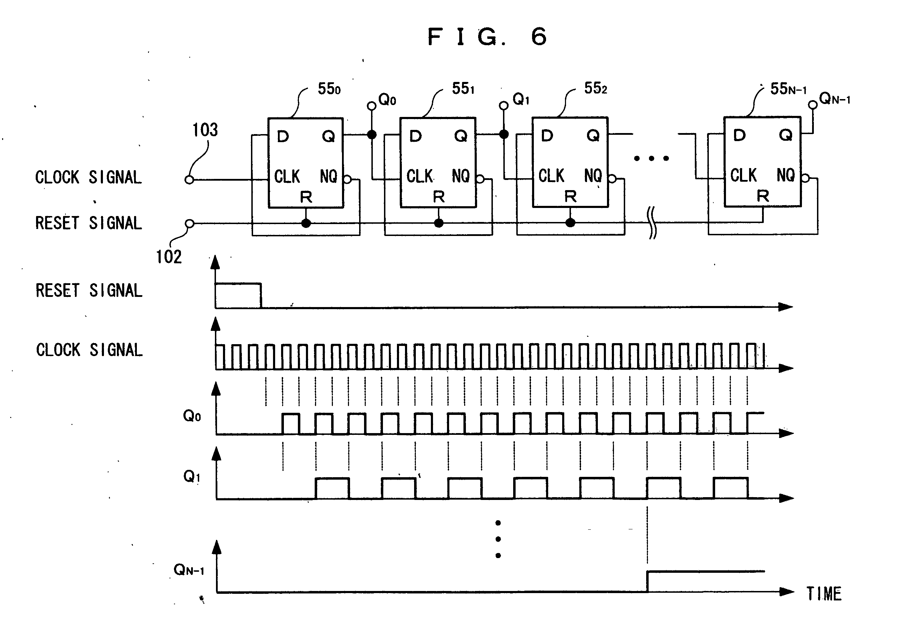

FIG. 6 shows an exemplary configuration of the N-bit binary counter 101 for measuring received-signal wait time T₀ and a timing diagram.

The N-bit binary counter comprises N flip-flops 55₀ through 55_{N-1}. A clock signal is inputted into the CLK of the flip-flop 55₀ in the first stage and an output NQ from the flip-flop 55 is returned to its input D so that the clock signal is frequency-divided by 2 and the resulting output is outputted through an output Q₀. Likewise, the flip-flops 55₁ through 55_{N-1}, which are connected in series, provide frequency-divided clocks through Q₁ through Q_{N}. The number of clocks is counted from when the reset signal is released until a reception start signal is inputted, thereby measuring the received-signal wait time T₀.

The number of bits required for the binary counter will be considered below.

The reader/writer 2 does not know when a non-contact IC card 1 comes into its communication coverage. It therefore periodically superimposes a polling signal on a downlink signal. The period T_{DL} of the downlink signal depends on system specifications. In this example, it is approximately 5 msec according to ISO/IEC 14443. Typically a carrier is used for a clock signal, therefore the frequency of the clock is 13.56 MHz.

Accordingly, the number of clock signals generated during the downlink signal period T_{DL} is 67,567 = approximately 2¹⁶. 16-bit random numbers can be generated by the 16-bit binary counter under these conditions.

A logic circuit unit 21 sends back to the reader/writer 2 a random number that is generated by using a count outputted from the random-number generator circuit 100, or a random number that is obtained by converting the outputted count by using its own encryption key.

While an asynchronous binary count-up counter is used in the present embodiment, a synchronous counter or a count-down counter may be used to provide the same effect.

While Q₀ through Q_{N-1} are directly outputted in parallel in this example, these bits may be rearranged. In particular, they may be rearranged in a different sequence, Q_{N-1} - Q₀, for example, to increase their randomness.

### Second Embodiment

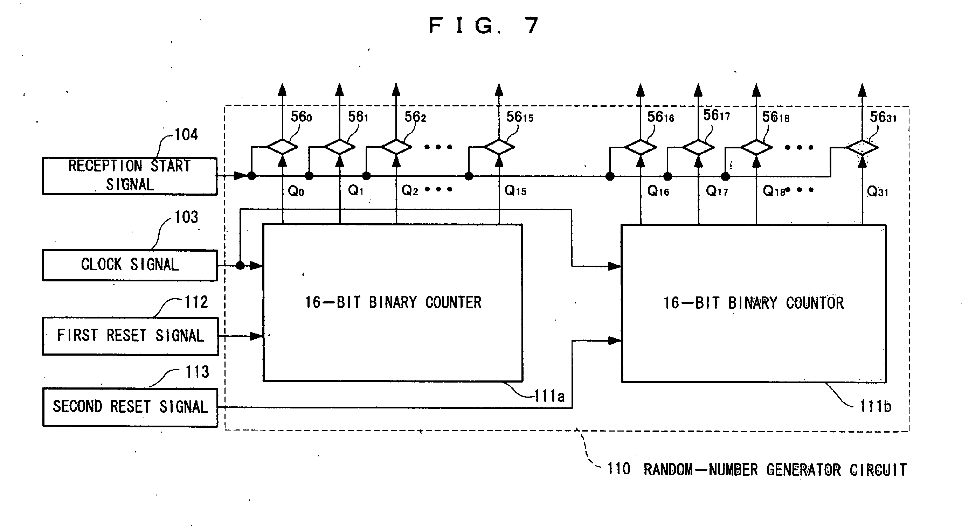

FIGS. 7 to 9 show a second embodiment of the present invention.

The random-number generator circuit 100 in the first embodiment provides completely random received-signal wait times T₀. However, it has the problem that the number of bits of a random number is as small as 16 bits. If the number of bits of a random number is small, a malicious third person may succeed in two-way authentication between a non-contact IC card and a reader/writer 2 at least once per 2¹⁶ trials. Therefore, there is need for increasing the number of bits of a random number in order to further improve the security of a non-contact IC card 1.

FIG. 7 shows a random-number generator circuit 110 replacing the random-number generator circuit 23 in the non-contact IC card 1 shown in FIG. 15.

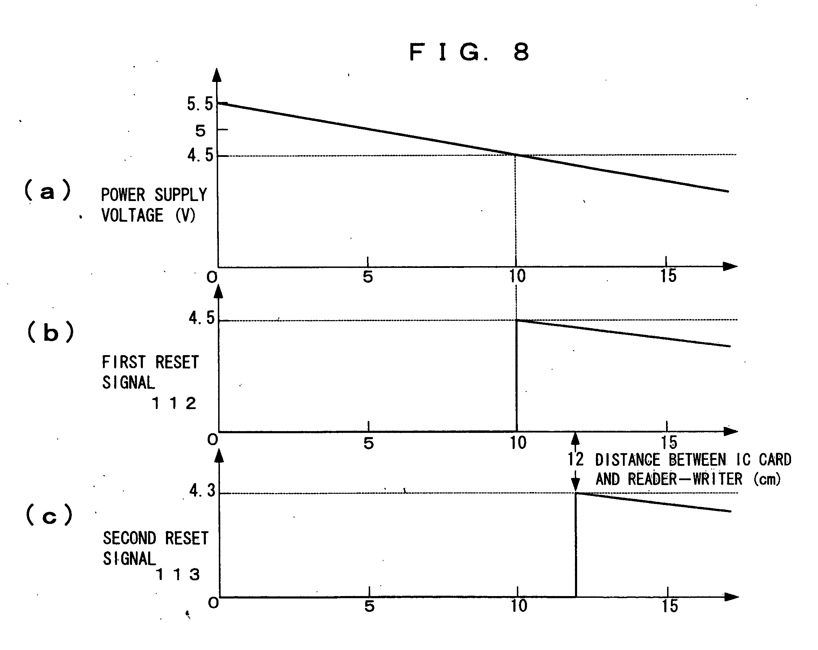

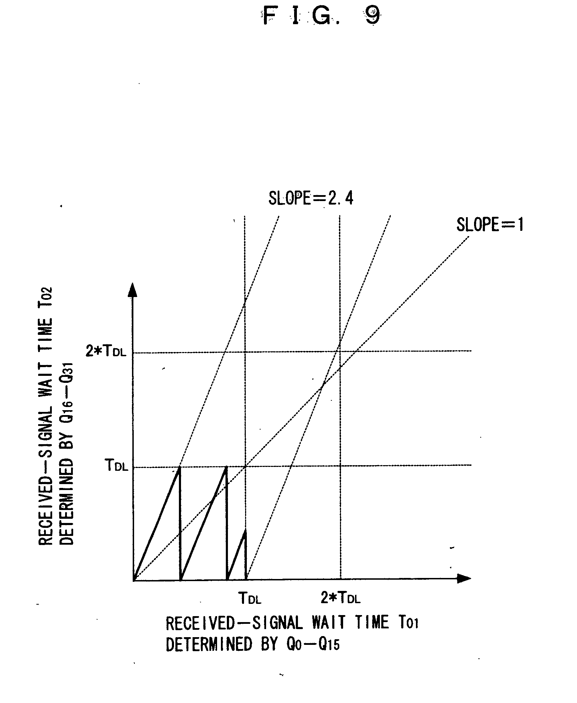

FIG. 8 shows dependence of first and second reset signals 112 and 113 on distance between a non-contact IC card 1 and a reader/writer 2. FIG. 9 shows a relationship between received-signal wait times T₀₁ and T₀₂.

The random-number generator circuit 110 comprises two 16-bit binary counters 111a and 111b, which are first and second random-number generators, and 32 transfer gates 56₀ to 56₁₅ and 56₁₆ to 56₃₁.

The 16-bit binary counter 111a start to count clock signals 103 in response to a first reset signal 112. The 16-bit binary counter 111b starts to count clock signals 103 in response to a second reset signal 113.

The first reset signal 112 is set to transition at a minimum operating voltage (4.5V) required for operating a typical non-contact IC card LSI 11 and its release distance is set at 10 cm, as shown in FIGS. 8a and 8b, so that data can be properly written in a memory circuit unit 22 in the non-contact IC card LSI 11.

The second reset signal 113 is set to transition at 4.3V, which is lower than that of the first reset signal 112 by 0.2V, as shown in FIGS. 8a and 8c.

A voltage of 4.3V does not impair a proper operation of logic circuits in the non-contact IC card LSI 111. The second reset signal 113 having a reset voltage of 4.3V can be released at a distance of approximately 12 cm between a non-contact IC card 1 and the reader/writer 2. The difference between the release distances of the first and second reset signals 112 and 113 is approximately 2 cm.

The speed of movement of a person passing through a non-contact IC card system of a ticket gate at a train station is approximately 6 Km per hour. It takes approximately 12 msec for a non-contact IC card carried by the person to move a distance of 2 cm, which is the difference between the release distances of the first and second reset signals 112 and 113, is approximately 12 msec. Period T_{DL} of a typical downlink signal is 5 msec. Accordingly, the difference of 2 cm between the release distances of the first and second reset signals 112 and 113 is equivalent to 2.4 periods T_{DL} of the downlink signal.

As shown in FIG. 9, there is correlation between a received-signal wait time T₀₁ determined by Q₀ to Q₁₅ and a received-signal wait time T₀₂ determined by Q₁₆ to Q₃₁. In practical use, however, the slope of correlation between the received-signal wait times T₀₁ and T₀₂ deviates from a factor of 2.4 each time a non-contact IC card 1 comes into the coverage of the reader/writer 2 because the speed of movement of users varies. Thus, the correlation is very small. Therefore, Q₀ to Q₁₅ and Q₁₆ to Q₃₁ can be used as random numbers by arranging them in a parallel bit form.

A logic circuit unit 21 sends back to the reader/writer 2 a random number that is generated by using a count outputted from the random-number generator circuit 110, or a random number that is obtained by converting the outputted count by using its own encryption key.

While Q₁ to Q₃₁ are directly outputted in parallel in this example, these bits may be rearranged.

It will be appreciated that a random number consisting of 32 bits or-more can be readily provided by providing a plurality of reset signals and 16-bit binary counters.

### Third Embodiment

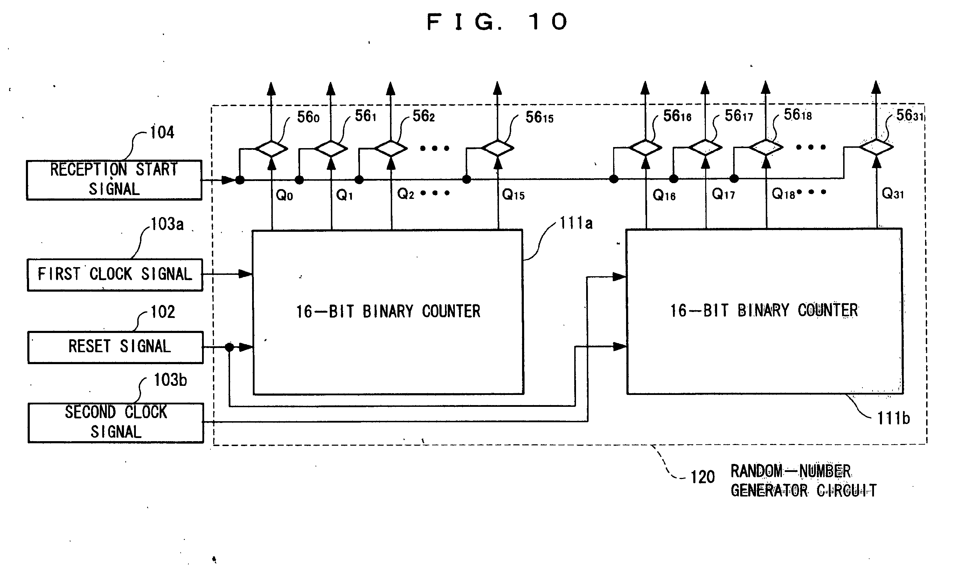

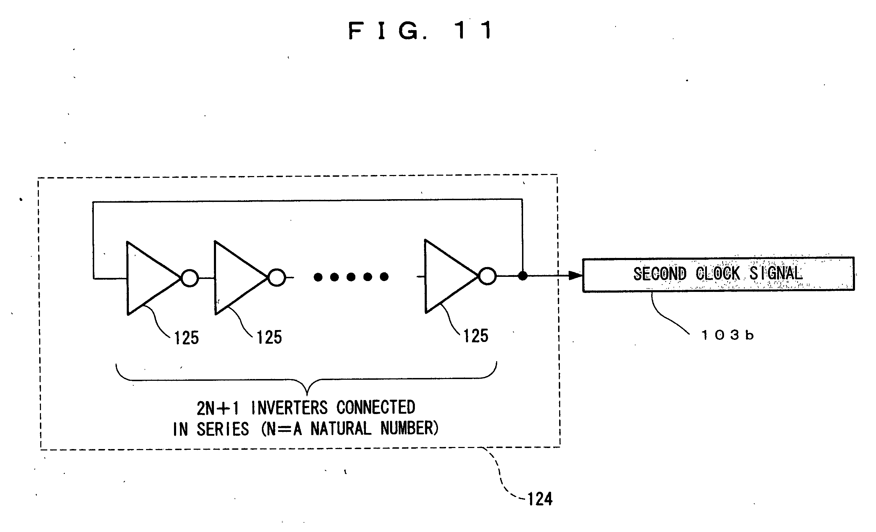

FIGS. 10 and 11 show a third embodiment of the present invention.

The random-number generator circuit in the first embodiment provides completely random received-signal wait times T₀. However, it has the problem that the number of bits of a random number is as small as 16 bits. If the number of bits of a random number is small, a malicious third person may succeed in two-way authentication between a non-contact IC card and a reader/writer 2 at least once per 2¹⁶ trials. Therefore, there is need for increasing the number of bits of a random number.

FIGS. 10 and 15 show a random number generator circuit included in the non-contact IC card 1 shown in FIG. 15 in place of the random number generator circuit 23.

The random number generator circuit 120 comprises two 16-bit binary counters 111a and 111b, which are first and second random number generators, and 32 transfer gates 56₀ to 56₃₁.

First and seconds clock signals 103a and 103b which have different frequencies are inputted into each of the 16-bit binary counters 111a and 111b.

A clock generator circuit 124, which generates the second clock signal 103b, is a ring oscillator consisting of 2N + 1 (an odd number of) inverters connected in series as shown in FIG. 11. The first clock signal 103a is a synchronous clock provided by a clock generator circuit 32 dividing a carrier sent from the reader/writer 2. The first clock signal 103 operates at the frequency (13.56 MHz in this example) of the carrier. The second clock signal 103b operates at a frequency which depends on the number of the stages of the ring oscillators and the capacity of the inverters 125.

As with the second embodiment, the number of bits of a random number can be readily increased by setting the constant of the clock generator circuit 124 to a value approximately twice as high as 13.56 MHz.

A logic circuit unit 21 sends back to the reader/writer 2 a random number that is generated by using a count outputted from the random-number generator circuit 120, or a random number that is obtained by converting the outputted count by using its own encryption key.

While Q₁ to Q₃₁ are directly outputted in parallel in this example, these bits may be rearranged.

It will be appreciated that a random number consisting of 32 bits or more can be readily provided by providing a plurality of pairs of the clock signals and 16-bit binary counters.

### Fourth Embodiment

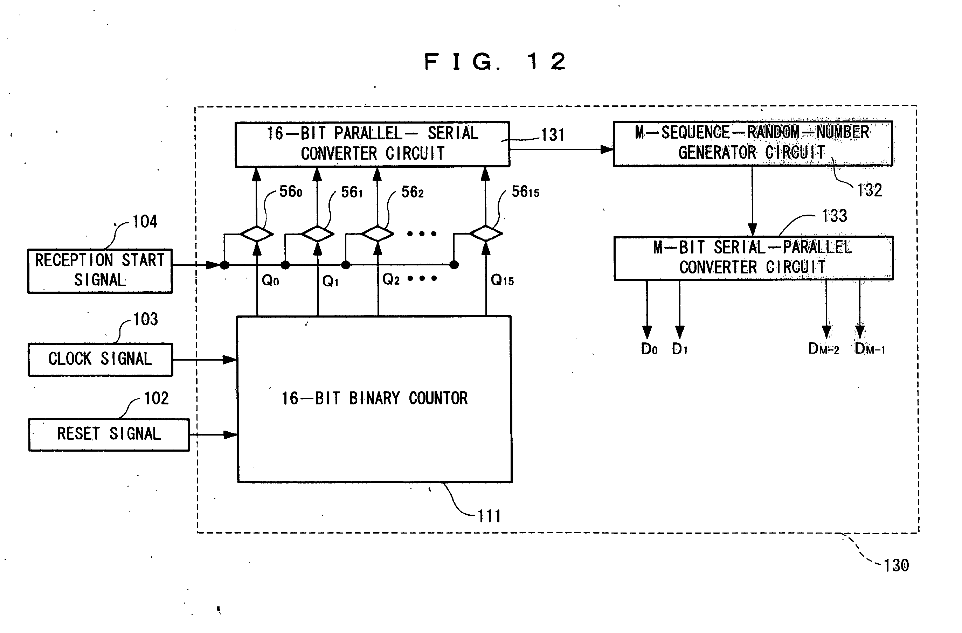

FIG. 12 shows a fourth embodiment of the present invention.

The random-number generator circuit in the first embodiment provides completely random received-signal wait times T₀. However, it has the problem that the number of bits of a random number is as small as 16 bits. If the number of bits of a random number is small, a malicious third person may succeed in two-way authentication between a non-contact IC card and a reader/writer 2 at least once per 2¹⁶ trials. Therefore, there is need for increasing the number of bits of a random number.

There would be correlation, albeit very low, among 16-bit random numbers generated by the random-number generator circuits of the second and third embodiments. Therefore, there is need for generating random numbers that are equally random.

FIG. 12 shows a random-number generator circuit of a fourth embodiment, which is included in the non-contact IC card 1 shown in FIG. 15 in place of the random-number generator circuit 23.

The random-number generator circuit 130 comprises 16-bit binary counters 111a and 111b, 32 transfer gates 56₀ to 56₃₁, a 16-bit parallel-serial converter circuit 131, an M-sequence-random-number generator circuit 132, and an M-bit serial-parallel converter circuit 133.

Since the M-sequence-random-number generator circuit 132 operates logically, an initial value must be set when a reset signal is released. That is, if the initial value were not set after the reset signal is released, it would persistently output "L" when all output signal from the shift registers in the M-sequence-random-number generator circuit 132 become "L".

When an M-sequence-random-number generator circuit 132 by itself is used in a random-number generator, typically initial value setting-is important. An identification number set in a memory circuit unit 22 of each non-contact IC card 1 is conventionally used as the initial value to generate a random number. With such an arrangement, different pseudo-random numbers can be generated for different non-contact IC cards 1.

However, because the initial values are fixed in this method for generating random numbers, the same sequence of random numbers is generated every time power is turned on. Furthermore, if a malicious third person can analyze the content of the memory circuit unit 22 to obtain the initial number on which the generation of random numbers is based is contained in the memory circuit unit 22, the person can readily know the pattern of random number generation. Therefore, this method cannot provide adequate security.

To solve this problem, a random number that is obtained by means of the random-number generator of the first embodiment is used as the initial value for the random M-sequence-random-number generator circuit 132. As a result, a random number can be generated that provides higher security and is made up of a large number of bits corresponding to the bit count of the M-series-random-number generator circuit 132.

While the 16-bit parallel-serial converter circuit 131 and M-series-random-number generator 132 are used to elongate a random number provided by the random-number generator of the first embodiment and provide bit diffusion, the 160-bit parallel-serial converter circuit 131 and M-series-random-number generator circuit 132 can be used to perform similar operations on a random number generated according to the second or third embodiment.

### Fifth Embodiment

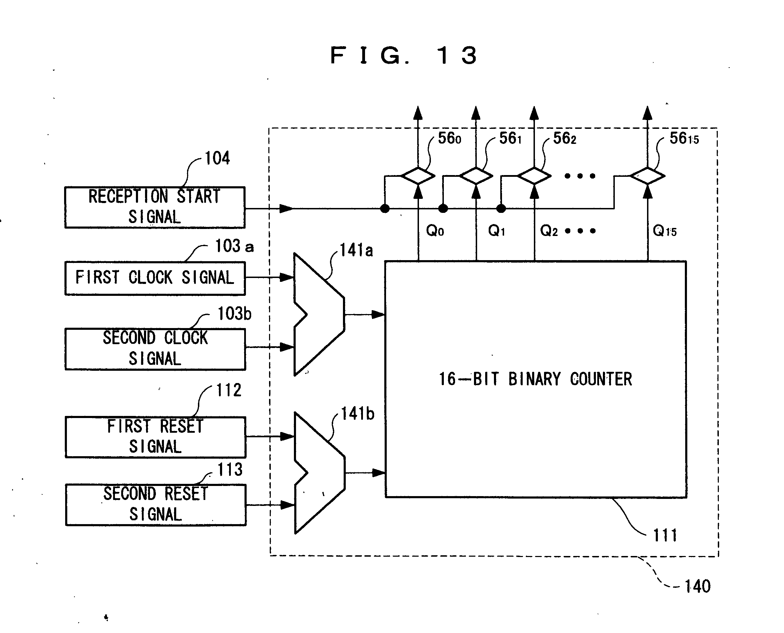

FIG. 13 shows a fifth embodiment of the present invention.

The random-number generator circuits in the first through fourth embodiments provide received-signal wait times T₀ as completely random numbers under normal usage conditions. However, if a malicious third person brings a non-contact IC card 1 close to a reader/writer 2 in the same way each time he/she passes through, they output the same values instead of random numbers. Therefore, there is need for increasing the randomness of numbers.

FIG. 13 shows a random-number generator circuit included in the non-contact IC card 1 shown in FIG. 15 in place of the random-number generator circuit 23.

The random-number generator circuit 140 comprises a 16-bit binary counter 111, 16 transfer gates 56₀ to 56₁₅, and selectors 141a and 141b.

One of first and second clock signals 103a and 103b having different frequencies is selected by the selector 141a to input into a clock of the 16-bit binary counter 111.

The clock generator circuit that generates the first clock signal 103a is a ring oscillator consisting of 2N+1 (an odd number of) inverters connected in series and has a clock frequency that varies depending on a power supply voltage and temperature.

The second clock signal 103b operates at the frequency (13.56 MHz, in this example) of a carrier provided from a reader/writer 2.

One of first and second reset signals 112 and 113 that are invoked at a different voltage is selected by the selector 141b as a signal for resetting the 16-bit binary counter 111, that is a reference signal for the 16-bit binary counter 111 to start operating.

In this way, the selectors 141a and 141b are used to switch between the first and second clock signals 103a and 103b and switch between the first and second reset signals 112 and 113, thereby allowing the 16-bit binary counter 111 to provide a different output every time it responds to a recursive external operation. Thus, a different random number is outputted every time a malicious third person brings a non-contact IC card close to the reader/writer 2 in the same manner. Consequently, safer random numbers can be generated and used.

As described above, the semiconductor integrated circuit according to the present invention is used in a data-carrier recognizing a signal sent from a reader/writer and responding by returning a signal in a non-contact information system. Provided in the semiconductor integrated circuit are a random-number generator circuit for counting clock signals from a time when an output voltage obtained by rectifying a carrier sent from the reader/writer exceeds a predetermined value until the data carrier recognizes the reader/writer to measure the time period; and a logic circuit unit for using its own encryption key to convert a count output provided from the random-number generator circuit at a time when the data carrier recognizes the reader/writer into a random number and sending the random number back to the reader/writer. The amount of time from when the data carrier enters the communication coverage of the reader/writer until it actually receives a command from the reader/writer is measured and the measured value (time) is used as a random-number value. Thus, an aperiodic, completely and equally random numbers can be generated each time the data carrier enter the coverage of the reader/writer. Accordingly, a secure data carrier that resists counterfeiting by a malicious third person can be readily implemented.

Furthermore, according to the present invention, a similarly secure data carrier can be readily implemented by providing a first random-number generator circuit for measuring the time period from a time when an output voltage obtained by rectifying a carrier sent from a reader/writer exceeds a first predetermined value until a data carrier recognizes the reader/writer; a second random-number generator circuit for measuring the time period from a time when the output voltage obtained by rectifying the carrier sent from the reader/writer exceeds a second predetermined value until the data carrier recognizes the reader/writer from a received signal; and a logic circuit unit for using its own encryption key to convert count outputs provided from the first and second random-number generator circuits at a time when the data carrier recognizes the reader/writer into a random number and sending the random number back to the reader/writer; or providing a first random-number generator circuit for counting first clock signals from a time when an output voltage obtained by rectifying a carrier sent from a reader/writer exceeds a predetermined value until a data carrier recognizes the reader/writer to measure the time period; a second random-number generator circuit for counting second clock signals different from the first clock signal from a time when the output voltage obtained by rectifying a carrier sent from a reader/writer exceeds the predetermined value until a data carrier recognizes the reader/writer to measure the time period; and a logic circuit unit for using its own encryption key to convert count outputs provided from the first and second random-number generator circuits at a time when the data carrier recognizes the reader/writer into a random number and sending the random number back to the reader/writer.

## Claims

1. A semiconductor integrated circuit to be used in a data carrier (1) recognizing a signal sent from a reader/writer (2) and responding by returning a signal to the reader/writer (2) in a non-contact information system, wherein
the semiconductor integrated circuit comprises:
a rectifier circuit (30) receiving and rectifying carrier transmitted from the reader/writer (2);
a demodulator circuit (33) demodulating inputted received signals to reproduce data; and
a random-number generator circuit (100) counting a clock signal (103) from a time when an output voltage from the rectifier circuit exceeds a predetermined value until the reader/writer (2) is recognized to measure a time period (T₀) and generate random numbers.

2. The semiconductor integrated circuit according to claim 1, wherein a reset generator circuit (35) is provided for detecting a time when an input voltage exceeds a predetermined value by using, as an input, the output voltage from the rectifier circuit (30), and the random-number generator circuit (100) starts counting in response to an output signal from the reset generator circuit (35).

3. The semiconductor integrated circuit according to claim 1, wherein the random-number generator circuit (100) ends the counting when it recognizes a modulated signal from the modulator (33) modulating an inputted received signal to restore data, or a synchronization signal contained in the received signal.

4. The semiconductor integrated circuit according to claim 1, wherein the clock signal (103) is a synchronous clock obtained by frequency-dividing the carrier sent from the reader/writer (2) by means of a clock generator circuit (32).

5. The semiconductor integrated circuit according to claim 1, further comprising a logic circuit unit returning random numbers generated by the random-number generator circuit to the reader/writer.

6. A semiconductor integrated circuit to be used in a data carrier (1) recognizing a signal sent from a reader/writer (2) and responding by returning a signal to the reader/writer (2) in a non-contact information system, wherein
the semiconductor integrated circuit comprises:
a rectifier circuit (30) receiving and rectifying. carrier transmitted from the reader/writer (2);
a demodulator circuit (33) demodulating inputted received signals to reproduce data;
a first random-number generator circuit (111a) measuring a time period (T₀₁) from a time when an output voltage from the rectifier circuit exceeds a first predetermined value until the reader/writer (2) is recognized to generate random numbers; and
a second random-number generator circuit (111b) measuring a time period (T₀₂) from a time when the output voltage from the rectifier circuit exceeds a second predetermined value until the reader/writer (2) is recognized to generate random numbers.

7. The semiconductor integrated circuit according to claim 6, further comprising a logic circuit unit returning random numbers generated by the first and second random-number generator circuits to the reader/writer.

8. A semiconductor integrated circuit to be used in a data carrier (1) recognizing a signal sent from a reader/writer (2) and responding by returning a signal to the reader/writer (2) in a non-contact information system, wherein
the semiconductor integrated circuit comprises:
a rectifier circuit (30) receiving and rectifying carrier transmitted from the reader/writer (2);
a demodulator circuit (33) demodulating inputted received signals to reproduce data;
a first random-number generator circuit (111a) counting a first clock signal (103a) from a time when an output voltage from the rectifier circuit exceeds a predetermined value until the reader/writer (2) is recognized to measure a time period (T₀₁) and generate random numbers; and
a second random-number generator circuit (111b) counting a second clock signal (103b) different from the first clock signals (103a) from a time when the output voltage from the rectifier circuit exceeds a predetermined value until the reader/writer (2) is recognized to measure a time period (T₀₂) and generate random numbers.

9. The semiconductor integrated circuit according to claim 8, wherein the first clock signal (103a) is a synchronous clock obtained by frequency-dividing the carrier sent from the reader/writer (2) by means of a clock generator circuit (32), and the second clock signal (103b) is an asynchronous clock generated by an asynchronous clock generator circuit (124).

10. The semiconductor integrated circuit according to claim 8, further comprising a logic circuit unit returning random numbers generated by the first and second random-number generator circuits to the reader/writer.

11. The semiconductor integrated circuit according to any one of claims 1, 6 and 8, further comprising a parallel-serial converter circuit (131) converting a bit-parallel random number generated by the random-number generator into a bit-serial random number, and an M-sequence-random-number generator circuit (132) generating an M-sequence random number by using a random number outputted from the parallel-serial converter circuit (131) as an initial value.

12. The semiconductor integrated circuit according to any one of claims 1, 6 and 8, wherein the random-number generator circuit comprises a binary counter, and the semiconductor integrated circuit further comprises a first selector circuit selecting a clock signal to be counted by the binary counter and a second selector circuit (141b) selecting a reset signal for resetting the binary counter.

13. A data carrier (1) mounted with a semiconductor integrated circuit according to any one of claims 1 through 12.
